# EUROPEAN PATENT APPLICATION

(11) **EP 4 723 436 A1**
(43) Date of publication of application: **08.04.2026**
(21) Application number: 24810760.9
(22) Date of filing: 15.04.2024
(51) Int. Cl.: H02K 3/50

(54) **MOTOR**

(30) Priority: 25.05.2023 JP 2023086392
(71) Applicant: Panasonic Intellectual Property Management Co., Ltd., Kadoma-shi, Osaka 571-0057 (JP)
(72) Inventor: KAMADA, Yasushi, Osaka 571-0057 (JP)
(74) Representative: SSM Sandmair
(86) International application number: PCT/JP2024/014927
(87) International publication number: WO 2024/241752

(57) **Abstract**

A motor includes a bottomed cylindrical motor case, a rotor housed inside the motor case and including a rotation shaft having an axis extending in an axial direction, a stator housed inside the motor case and arranged while being spaced from the rotor at a predetermined interval, a bracket including a recess, including an insulation material disposed to cover an opening of the motor case, a cover attached to the bracket to cover the recess, and a wiring board housed in the recess and attached to the bracket. The stator includes an annular yoke centered on the axis, a plurality of teeth arranged at predetermined intervals on an inner periphery of the yoke, and coils each attached to a corresponding one of the plurality of teeth. Each of the coils includes a first connection terminal at one end and a second connection terminal at the other end, and each of the first connection terminal and the second connection terminal linearly protrudes toward one side in the axial direction. The wiring board includes a plurality of first through-holes. The bracket includes a plurality of second through-holes for orderly arranging the first connection terminal and the second connection terminal. When a longitudinal direction of the rotation shaft is defined as the axial direction, the plurality of first through-holes and the plurality of second through-holes are located at positions each overlapping a corresponding one of the first connection terminal and the second connection terminal, as viewed in the axial direction. Each of the first connection terminal and the second connection terminal is inserted through a corresponding one of the plurality of first through-holes, is inserted through a corresponding one of the plurality of second through-holes, and is connected to wiring provided on the wiring board.

## Description

### TECHNICAL FIELD

The present disclosure relates to a motor, and particularly to a motor including a wiring board.

### BACKGROUND ART

Conventionally, there is known a motor in which a stator and a rotor are housed inside a motor case, and in which coils attached to teeth included in a stator core and power feed wiring connected to an external power supply are connected via a printed wiring board (hereinafter, simply referred to as a wiring board) (see, for example, PTLs 1 to 3). Power supplied from the external power supply is supplied from the power feed wiring to each coil via wiring provided on the wiring board.

In a conventional motor as described in PTLs 1 to 3, a terminal pin is typically used to electrically connect a wiring board and a coil. The terminal pin is fixed to an insulator or the like. An end portion of the coil is bound to the terminal pin. The terminal pin is electrically connected to the wiring board, whereby the wiring board and the coil are electrically connected. Note that, in this case, through-holes are often provided in the wiring board. Each terminal pin is inserted through a corresponding one of the through-holes. Each terminal pin inserted through the corresponding one of the through-holes is subjected to soldering or the like. Each terminal pin is connected to wiring provided on the wiring board by soldering or the like. Therefore, it is necessary to position each terminal pin in advance with respect to the corresponding one of the through-holes of the wiring board.

In a case where the terminal pin is not used, for example, a fixture groove is provided in the insulator, and the end portion of the coil is fitted into the fixture groove to position the end portion of the coil, as disclosed in PTL 1. Further, a notch is provided in the wiring board, the end portion of the coil is inserted, and then the wiring provided on the wiring board and the end portion of the coil are connected by soldering.

Generally, the coil is housed for each slot of a stator. Both ends of the coil need to be connected to the wiring provided on the wiring board. For example, in a case where the number of slots is 12, the wiring of the wiring board and the coils need to be connected at 24 locations.

However, in both the case of using the terminal pin and the case of fitting the end portion of the coil into the fixture groove as described in PTL 1, many person-hours have been required for positioning work between the end portion of the coil and a connection portion in the wiring of the wiring board, and wiring connection work between the coil and the wiring.

### Citation List

### Patent Literature

PTL 1: Japanese Patent No. 3541449
PTL 2: Unexamined Japanese Patent Publication No. 2011-151875
PTL 3: Japanese Patent No. 7024656

### SUMMARY OF THE INVENTION

The present disclosure has been made in view of the above points. It is an object of the present disclosure to provide a motor in which connection work between an end portion of a coil and wiring of a wiring board can be easily and reliably performed.

In order to achieve the above object, a motor according to the present disclosure includes: a motor case having a bottomed cylindrical shape; a rotor housed inside the motor case, the rotor including a rotation shaft having an axis extending in an axial direction; a stator housed inside the motor case, the stator being arranged while being spaced from the rotor at a predetermined interval; a bracket including a recess, the bracket including an insulation material, the bracket covering an opening of the motor case; a cover attached to the bracket, the cover covering the recess; and a wiring board housed in the recess, the wiring board being attached to the bracket. The stator includes: a yoke having an annular shape, the yoke being centered on the axis; a plurality of teeth arranged at predetermined intervals on an inner periphery of the yoke; and coils each attached to a corresponding one of the plurality of teeth. Each of the coils includes a first connection terminal at one end and a second connection terminal at another end, and each of the first connection terminal and the second connection terminal linearly protrudes toward one side in the axial direction. The wiring board includes a plurality of first through-holes. The bracket includes a plurality of second through-holes, for orderly arranging the first connection terminal and the second connection terminal. When a longitudinal direction of the rotation shaft is defined as the axial direction, the plurality of first through-holes and the plurality of second through-holes are located at positions each overlapping a corresponding one of the first connection terminal and the second connection terminal, as viewed in the axial direction. Each of the first connection terminal and the second connection terminal is inserted through a corresponding one of the plurality of first through-holes, is inserted through a corresponding one of the plurality of second through-holes, and is connected to wiring on the wiring board.

According to the present disclosure, it is possible to easily and reliably perform connection work between an end portion of a coil and wiring of a wiring board.

### BRIEF DESCRIPTION OF THE DRAWINGS

Fig. 1 is an exploded perspective view of a motor according to an exemplary embodiment.
Fig. 2 is a cross-sectional view of the motor according to the exemplary embodiment.
Fig. 3A is a perspective view of a bracket as viewed from above.
Fig. 3B is a perspective view of the bracket as viewed from below.
Fig. 3C is a view of second through-holes as viewed from below.
Fig. 3D is a cross-sectional view taken along line IIID-IIID in Fig. 3C.
Fig. 3E is a cross-sectional view taken along line IIIE-IIIE in Fig. 3C.
Fig. 4 is a cross-sectional view of the vicinity of a second connection terminal of a coil in the motor according to the exemplary embodiment.
Fig. 5 is an enlarged view of part surrounded by a dashed line in Fig. 4.
Fig. 6A is a view illustrating one step of an assembly process of the motor according to the exemplary embodiment.
Fig. 6B is a view illustrating a step subsequent to the step illustrated in Fig. 6A.
Fig. 6C is a view illustrating a step subsequent to the step illustrated in Fig. 6B.
Fig. 6D is a view illustrating a step subsequent to the step illustrated in Fig. 6C.
Fig. 6E is a view illustrating a step subsequent to the step illustrated in Fig. 6D.
Fig. 7 is an enlarged view of a first connection terminal and the second connection terminal.
Fig. 8 is a view of second through-holes according to a modification as viewed from below.

### DESCRIPTION OF EMBODIMENT

Hereinafter, an exemplary embodiment of the present disclosure will be described with reference to the drawings. Note that the following description of a preferred exemplary embodiment is merely exemplary in nature, and is not intended to limit the present disclosure, its applications, or its use.

### (Exemplary embodiment)

### [Configuration of motor]

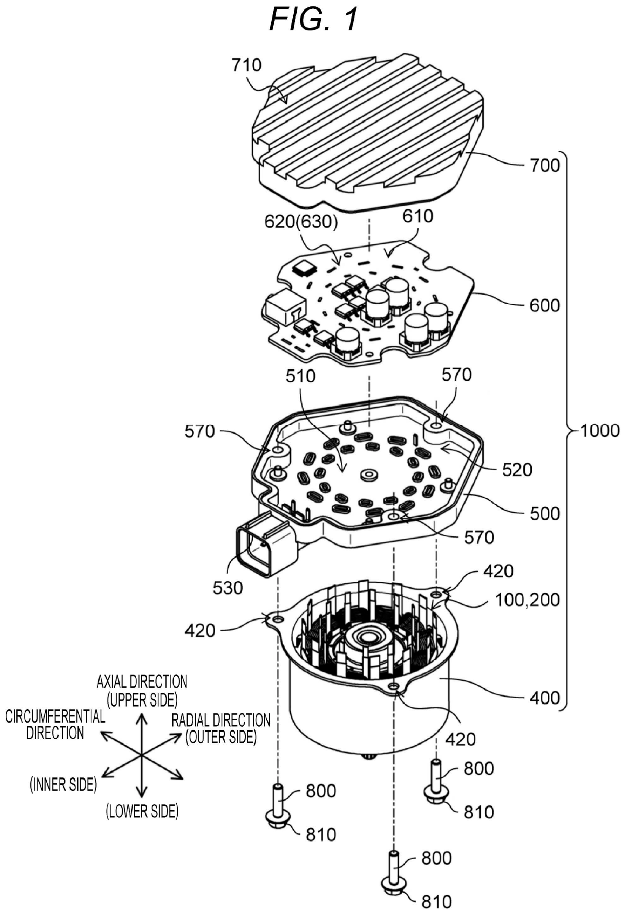

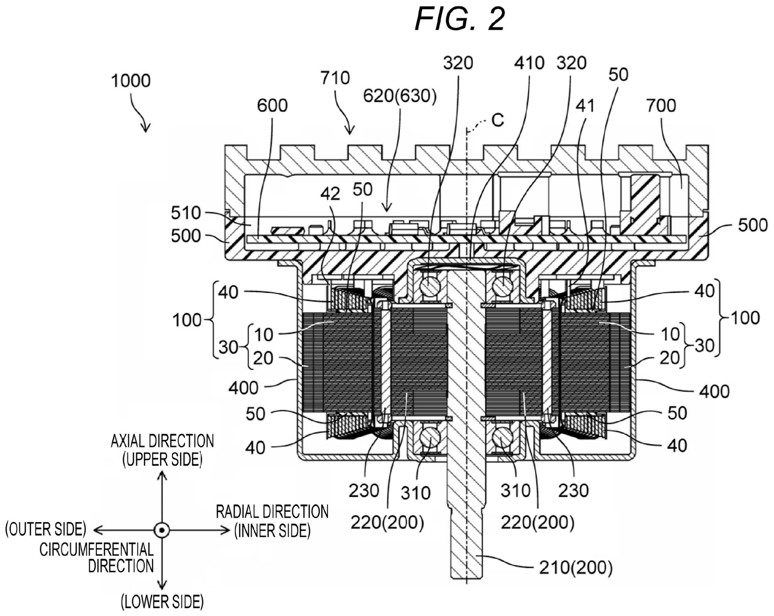

Fig. 1 is an exploded perspective view of motor 1000 according to the exemplary embodiment. Fig. 2 is a cross-sectional view of motor 1000 according to the exemplary embodiment.

In the following description, a direction in which rotation shaft 210 included in motor 1000 extends, that is, the longitudinal direction of rotation shaft 210 may be referred to as an "axial direction". A direction orthogonal to the axial direction, that is, a radial direction of motor 1000 may be referred to as a "radial direction". A direction along an outer circumferential periphery of motor 1000 may be referred to as a "circumferential direction". In the radial direction, a center side of motor 1000, that is, a side close to rotation shaft 210 may be referred to as an inner side. An outer peripheral side of motor 1000, that is, a side close to yoke 20 may be referred to as an outer side.

In the axial direction, a side of coil 40 on which first connection terminal 41 and second connection terminal 42 (see Fig. 2) are disposed may be referred to as an upper side, or above or upward, and a side opposite thereto may be referred to as a lower side, or below or downward.

Motor 1000 includes stator 100 and rotor 200. Motor 1000 includes components other than those illustrated in Figs. 1 and 2. However, for convenience of description, illustration and description of these components are omitted. Motor 1000 is a so-called inner rotor type motor. However, motor 1000 is not particularly limited thereto, and may be an outer rotor type motor.

As illustrated in Figs. 1 and 2, motor 1000 includes stator 100, rotor 200, motor case 400, bracket 500, wiring board 600, and cover 700.

Motor case 400 is a metal member having a bottomed cylindrical shape. Stator 100 and rotor 200 are housed inside motor case 400.

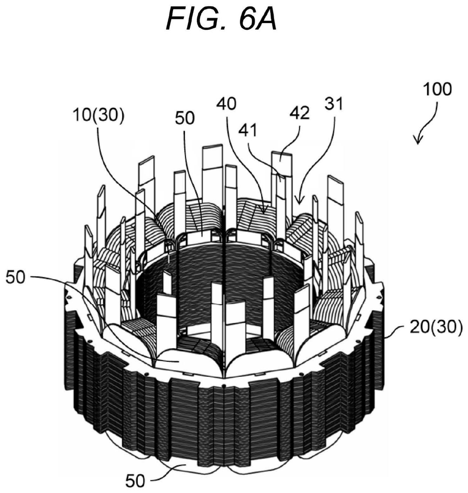

As illustrated in Fig. 2, stator 100 includes stator core 30 and coils 40. Stator 100 includes insulators 50 (see also Fig. 6A to be described later).

Stator core 30 includes yoke 20 having an annular shape and continuous in the circumferential direction, and a plurality of teeth 10 connected to the inner periphery of yoke 20 at equiangular intervals. Both yoke 20 and teeth 10 are formed by layering a plurality of electromagnetic steel sheets in the axial direction.

Coil 40 is a component including an element-wire wound body including a conductive wire having an insulation film (not illustrated) formed on a surface thereof. Coils 40 are attached to teeth 10 of stator core 30 with insulators 50 interposed therebetween. Coils 40 are received in slots 31. Slot 31 is located between adjacent teeth 10 (see Fig. 6A to be described later).

Coil 40 is a formed body including an element wire, including a conductor having a quadrangular cross section, helically wound into layers of n turns (n is a natural number). Both ends of coil 40 each have a linear shape along the axial direction. At both ends of coil 40, an end portion located on an inner side in the radial direction is first connection terminal 41, and an end portion located on an outer side in the radial direction is second connection terminal 42.

The "formed body" herein includes, for example, a formed body formed through the following steps. For example, a plurality of rectangular or L-shaped metal plates having different lengths, widths, or thicknesses are prepared, and these plates are subjected to pressing, or joined by cold welding, welding, or other methods, whereby a formed body is formed. A material for the plates is a low-resistance material such as copper or aluminum.

Alternatively, the formed body may be formed by so-called casting in which copper or the like is melted and poured into a mold. Alternatively, the formed body may be formed by bending, at a predetermined position, a plate-shaped element wire that is previously formed to have a width or thickness that differs in the middle. Alternatively, a plate-shaped element wire having a constant width and thickness may be subjected to rolling at a predetermined position to change the width and thickness in the middle, and the element wire may be then helically wound to form the formed body. In short, the formed body is formed by other additional processing than winding of an element wire, or the formed body is formed by a method different from simply winding an element wire. The formed body also includes an irregular-shaped coil.

A cross-sectional shape of coil 40 is simply required to be substantially quadrangular. For example, the cross-sectional shape of coil 40 may be a shape in which corners are chamfered. The cross-sectional shape of coil 40 is not limited to a quadrangular shape, and may be an n-polygon (n is an integer of 3 or more). The cross-sectional shape of coil 40 may be circular or elliptical.

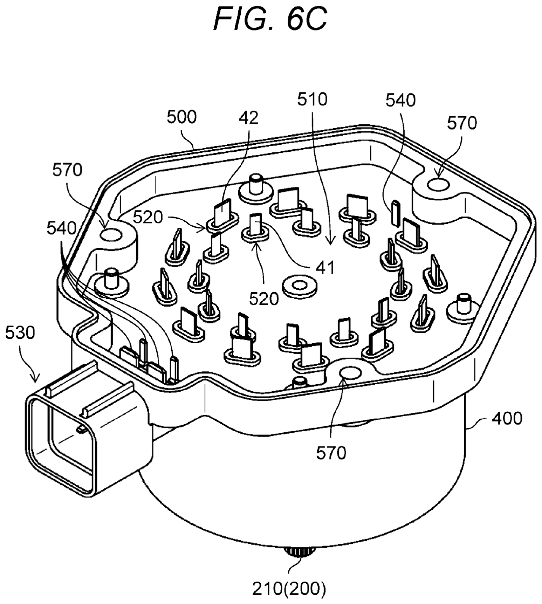

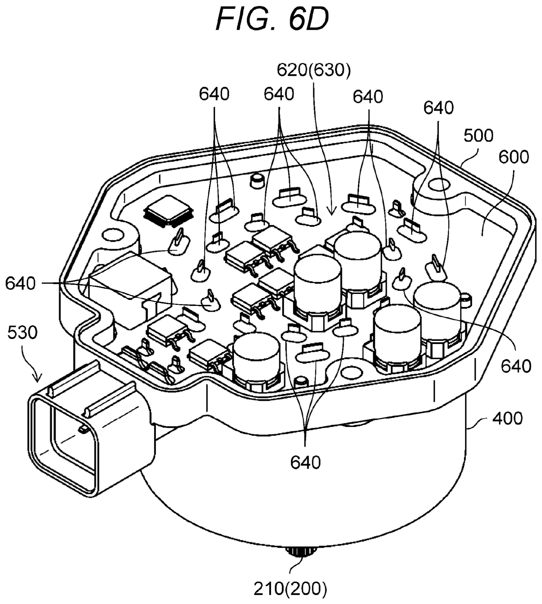

In any case, element wire forming coil 40 is required to have bending rigidity higher than or equal to a predetermined value. Specifically, it is sufficient that the bending rigidity of the element wire is kept high to such an extent that the element wire is not bent or is not greatly deformed during any of performing of mounting of bracket 500 and wiring board 600 and performing of connection between coils 40 (see Figs. 6C and 6D), which will be described later.

Insulator 50 has a tubular shape, and is an insulation member made of resin or the like. Each insulator 50 is attached to a corresponding one of the plurality of teeth 10. Insulator 50 is interposed between coil 40 and stator core 30, whereby coil 40 and stator core 30 are electrically insulated.

Insulator 50 has flange portions at both ends in the radial direction. Insulator 50 is a bobbin insulator divided in the radial direction. However, insulator 50 is not limited thereto. For example, insulator 50 may be divided into two in the axial direction. In this case, an insulation paper (not illustrated) may be interposed between insulator 50 and coil 40.

Rotor 200 includes rotor core 220 having a substantially cylindrical shape, rotation shaft 210, and a plurality of magnets 230. Rotor core 220 is formed with a through-hole in axis C. Rotation shaft 210 is inserted through the through-hole of rotor core 220. In the plurality of magnets 230, N poles and S poles are alternately arranged along the outer circumferential direction of rotor core 220 to face stator 100. Similarly to stator core 30, rotor core 220 is formed of a plurality of electromagnetic steel sheets layered in the axial direction.

Each of rotor core 220 and stator core 30 may include a magnetic body, and is not particularly limited to the structure illustrated in the present exemplary embodiment.

Bearings 310, 320 are housed in motor case 400. Bearing 310 and bearing 320 are provided to be separated from each other in the axial direction. Both bearing 310 and bearing 320 rotatably support rotation shaft 210. Bearing 310 is disposed below bearing 320 in the axial direction. Bearing 310 is received in a recess provided on a bottom surface of motor case 400. Bearing 320 is received inside bearing cover 410 attached to an upper surface of rotor core 220.

Bracket 500 is an insulation member made of resin or the like formed in a tray shape. Bracket 500 is attached to motor case 400 to cover an opening of motor case 400 and seal the inside thereof. Details of the configuration of bracket 500 will be described later.

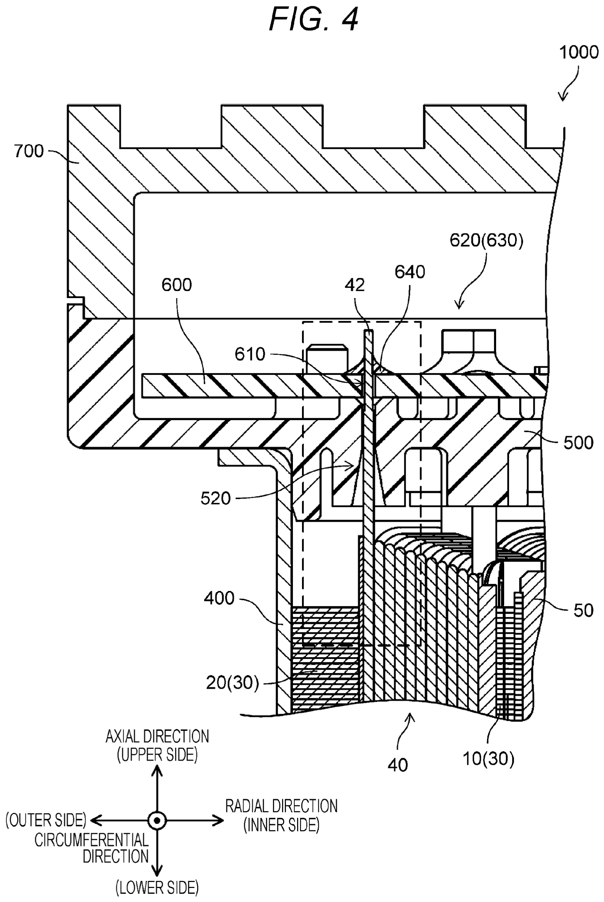

Wiring board 600 is, for example, a known printed wiring board. However, a plurality of first through-holes 610 (see Fig. 4 to be described later) are formed in wiring board 600. The arrangement and the like of first through-holes 610 will be described later.

A plurality of circuit components 630 are mounted to wiring (not illustrated) provided on a surface of wiring board 600. Circuit components 630 form drive control circuit 620 of motor 1000.

Cover 700 is a metal member. Cover 700 is attached to bracket 500 to cover board housing part 510 of bracket 500. A plurality of heat dissipation fins 710 are formed on an upper surface of cover 700. Circuit components 630 are connected to heat dissipation fins 710 via heat dissipation silicon (not illustrated) or the like. Heat generated in circuit components 630 is transferred to heat dissipation fins 710 via the heat dissipation silicon or the like. The heat transferred to heat dissipation fins 710 is dissipated from heat dissipation fins 710 to the outside of motor 1000.

The operation of motor 1000 will be described below. In the present exemplary embodiment, the plurality of coils 40 are three sets of coils 40 connected in series. When an external power supply (not illustrated) is connected to power supply connection port 530 provided in bracket 500, currents of three phases having a phase difference of 120° in terms of an electrical angle, that is, so-called U-phase, V-phase, and W-phase currents are supplied to the three sets of coils 40 and excitation occurs, and a rotating magnetic field is generated. The rotating magnetic field and a magnetic field generated by magnets 230 provided in rotor 200 interact with each other, and torque is generated in rotor 200. As a result, rotation shaft 210 supported by bearing 310 and bearing 320 rotates. The strength of the rotating magnetic field, the rotation speed of the motor, and the rotation amount of the motor are controlled by drive control circuit 620. Drive control circuit 620 is supplied with drive power from the external power supply connected to power supply connection port 530.

### [Configuration of bracket, and connection relationship among coil, bracket, and wiring board]

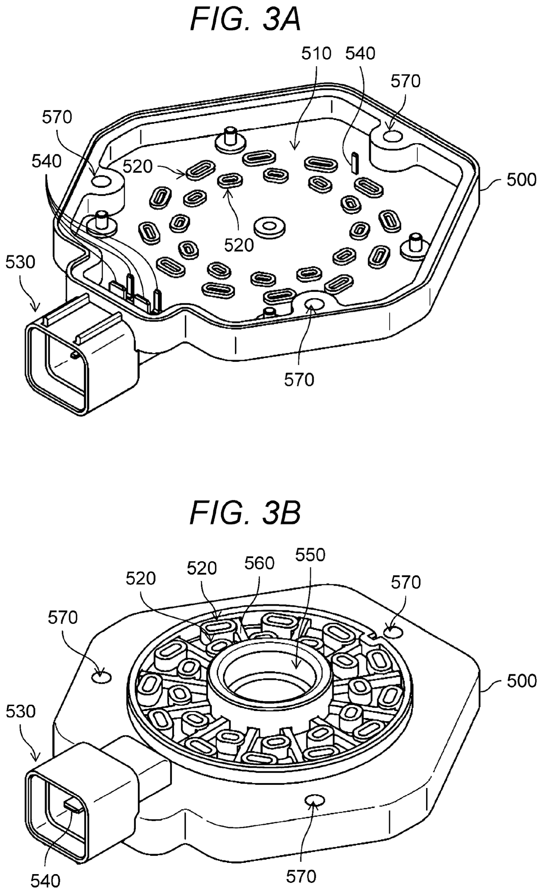

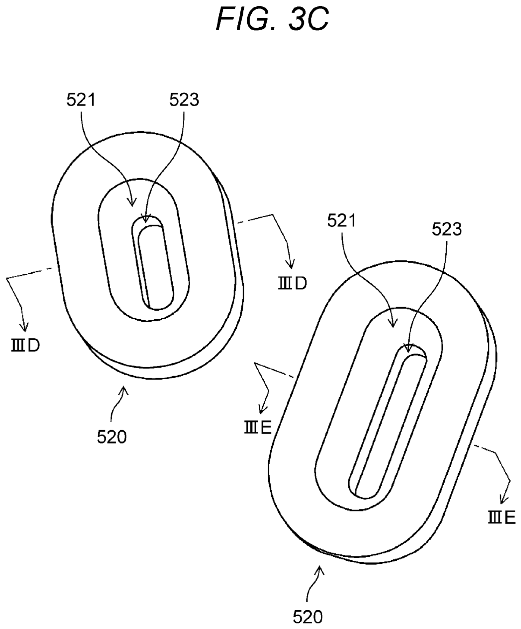

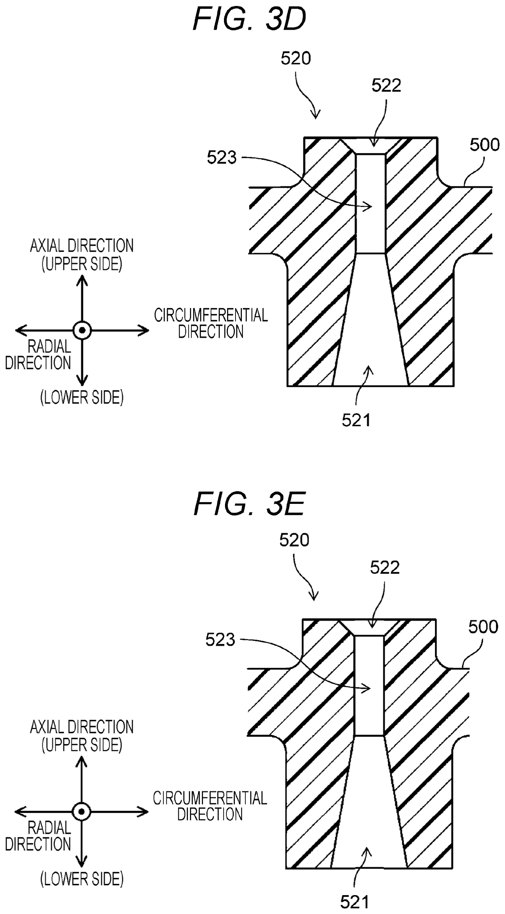

Fig. 3A is a perspective view of bracket 500 as viewed from above. Fig. 3B is a perspective view of bracket 500 as viewed from below. Fig. 3C is a view of second through-holes 520 as viewed from below. Fig. 3D is a cross-sectional view taken along line IIID-IIID in Fig. 3C. Fig. 3E is a cross-sectional view taken along line IIIE-IIIE in Fig. 3C.

As illustrated in Fig. 3A, bracket 500 is provided with board housing part 510 as a recess formed entirely thereover. Wiring board 600 is housed in board housing part 510. The plurality of second through-holes 520 are formed in a bottom plate of bracket 500. As described later, when bracket 500 is attached to motor case 400, second through-holes 520 are provided at positions each overlapping a corresponding one of first connection terminal 41 and second connection terminal 42 of coil 40, as viewed in the axial direction (see Fig. 1, and Fig. 4 to be described later). That is, as illustrated in Fig. 3A, second through-holes 520 are provided on an inner peripheral side and an outer peripheral side in the radial direction. Second through-holes 520 are provided at the same intervals as intervals at which coils 40 are arranged in the circumferential direction, on both the inner peripheral side and the outer peripheral side. However, second through-holes 520 on the inner peripheral side and second through-holes 520 on the outer peripheral side are arranged to be shifted from each other at predetermined intervals in the circumferential direction. This shift amount is the same as a shift amount in the circumferential direction between first connection terminal 41 and second connection terminal 42 of coil 40. Second through-hole 520 illustrated in Fig. 3D is a cross section of second through-hole 520 on the outer peripheral side. Second through-hole 520 illustrated in Fig. 3E is a cross section of second through-hole 520 on the inner peripheral side.

Power supply connection port 530 described above is provided on a side of bracket 500. A side of power supply connection port 530 is open. Lead-out wires 540 are disposed inside power supply connection port 530. Drive power is supplied to drive control circuit 620 provided on wiring board 600 via lead-out wires 540. A current for generating the line magnetic field is supplied from drive control circuit 620 to each coil 40.

As illustrated in Fig. 3B, bearing receptacle 550 and a plurality of ribs 560 are provided on a lower surface of bracket 500. Bearing receptacle 550 is a projection protruding downward (however, in Fig. 3B, upward) from the lower surface of bracket 500. Bearing receptacle 550 has a circular outer shape as viewed in the axial direction. When bracket 500 is attached to motor case 400, bearing 320 and bearing cover 410 covering bearing 320 are received in bearing receptacle 550. Bearing 320 is protected by bearing receptacle 550 and bearing cover 410 from vibration occurring during the operation of motor 1000 or impact received from the outside.

Similarly to bearing receptacle 550, rib 560 is a projection protruding downward from the lower surface of bracket 500. Ribs 560 are radially provided while ribs 560 are in contact with bearing receptacle 550. In between ribs 560 adjacent to each other, one second through-hole 520 on the inner peripheral side and one second through-hole 520 on the outer peripheral side are disposed.

By providing ribs 560, the strength of bracket 500 is ensured, and vibration occurring in bracket 500 during the operation of motor 1000 is reduced.

As illustrated in Figs. 3C to 3E, second through-holes 520 penetrate the bottom plate of bracket 500 and reach the lower surface of bracket 500. The width of second through-hole 520 in the radial direction changes in a depth direction, in this case, in the axial direction. Specifically, first opening 521 located on a lower side in the axial direction, second opening 522 located on an upper side in the axial direction, and terminal retainer 523 located between and communicating with first opening 521 and second opening 522 have different widths in the radial direction. In the following description, in a case where regarding each of parts of second through-hole 520 and first through-hole 610, the width thereof is simply referred to as the "width", this width means the width in the radial direction.

First opening 521 opens at a lower surface of the bottom plate of bracket 500. First opening 521 opens at an upper surface of the bottom plate of bracket 500. The widths of first opening 521 and second opening 522 are not constant but change along the axial direction. First opening 521 has a tapered shape in which the width decreases from the lower surface, described above, toward the inside of the bottom plate of bracket 500. Second opening 522 has a tapered shape in which the width decreases from the upper surface toward the inside of the bottom plate of bracket 500.

That is, first opening 521 has the widest width at a lower end thereof. First opening 521 has the narrowest width at part continuous with terminal retainer 523, that is, at an upper end of first opening 521, and, at the upper end, first opening 521 has the same width as the width of terminal retainer 523. Second opening 522 has the widest width at an upper end thereof. Second opening 522 has the narrowest width at part continuous with terminal retainer 523, that is, at a lower end of second opening 522, and, at the lower end, second opening 522 has the same width as the width of terminal retainer 523. The width of the lower end of first opening 521 is wider than the width of the upper end of second opening 522.

### [Arrangement relationship among connection terminal of coil, second through-hole of bracket, and first through-hole of wiring board]

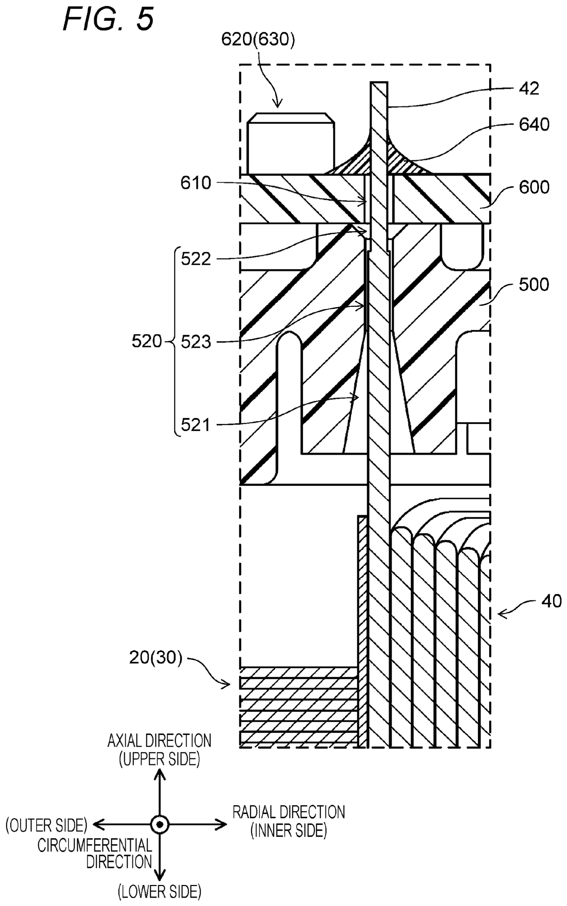

Fig. 4 is a cross-sectional view of the vicinity of second connection terminal 42 of coil 40 in motor 1000 according to the exemplary embodiment. Fig. 5 is an enlarged view of part surrounded by a dashed line in Fig. 4.

As illustrated in Figs. 4 and 5, at a time when motor 1000 is assembled, second connection terminal 42 of coil 40 is inserted through second through-hole 520 of bracket 500 and first through-hole 610 of wiring board 600. Second connection terminal 42 of coil 40 protrudes upward along the axial direction, with respect to an upper surface of wiring board 600.

Although not illustrated, first connection terminal 41 of coil 40 is similarly inserted through second through-hole 520 of bracket 500 and first through-hole 610 of wiring board 600. First connection terminal 41 of coil 40 also protrudes upward along the axial direction, with respect to the upper surface of wiring board 600.

That is, when bracket 500 is attached to motor case 400, first through-holes 610 and second through-holes 520 are provided at positions each overlapping a corresponding one of first connection terminal 41 and second connection terminal 42 of coil 40, as viewed in the axial direction (see also Fig. 1).

That is, first through-holes 610 are also provided on the inner peripheral side and the outer peripheral side in the radial direction. First through-holes 610 are also provided at the same intervals as intervals at which coils 40 are arranged in the circumferential direction, on both the inner peripheral side and the outer peripheral side. First through-holes 610 on the inner peripheral side and first through-holes 610 on the outer peripheral side are arranged to be shifted from each other at predetermined intervals in the circumferential direction. This shift amount is the same as a shift amount in the circumferential direction between first connection terminal 41 and second connection terminal 42 of coil 40.

As illustrated in Fig. 5, the width of terminal retainer 523 is equal to the width of second connection terminal 42, or is wider than the width of second connection terminal 42 by a predetermined value. That is, in second through-hole 520, the width of the lower end of first opening 521 and the width of the upper end of second opening 522 are wider than the width of second connection terminal 42. The predetermined value will be described later.

The width of first through-hole 610 is wider than the width of second connection terminal 42. However, the width of first through-hole 610 is narrower than the width of the upper end of second opening 522.

Although not illustrated, a magnitude relationship among the width of first connection terminal 41, the width of each part of second through-hole 520, and the width of first through-hole 610 is similar to a magnitude relationship among the width of second connection terminal 42, the width of each part of second through-hole 520, and the width of first through-hole 610 described above.

### [Assembly process of motor]

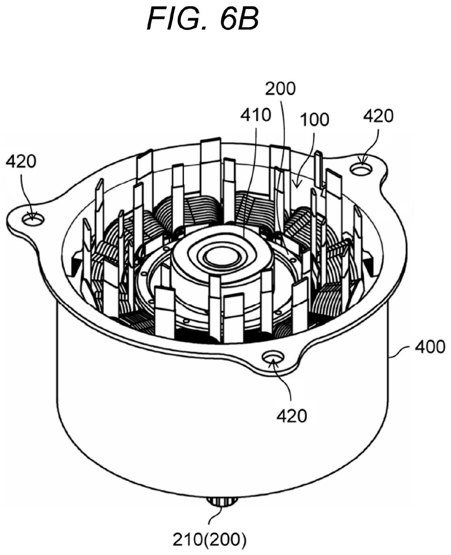

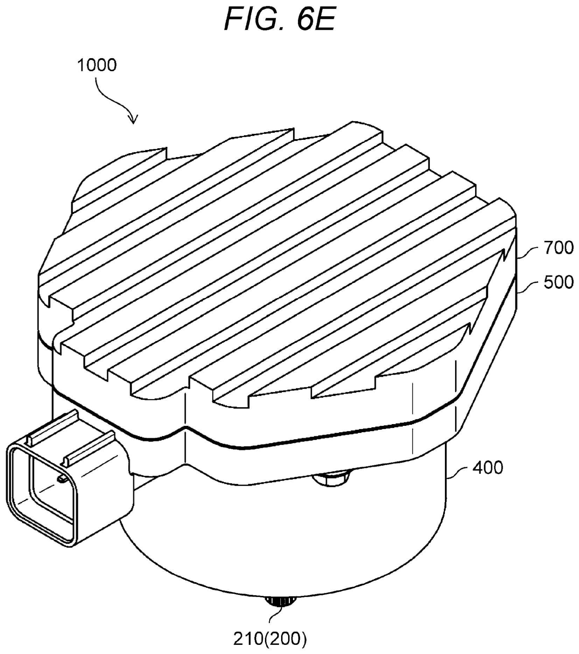

Fig. 6A is a view illustrating one step of an assembly process of motor 1000 according to the exemplary embodiment. Fig. 6B is a view illustrating a step subsequent to the step illustrated in Fig. 6A. Fig. 6C is a view illustrating a step subsequent to the step illustrated in Fig. 6B. Fig. 6D is a view illustrating a step subsequent to the step illustrated in Fig. 6C. Fig. 6E is a view illustrating a step subsequent to the step illustrated in Fig. 6D.

In assembling motor 1000, first, stator 100 is prepared as illustrated in Fig. 6A. At the time illustrated in Fig. 6A, the plurality of teeth 10 are connected to the inner periphery of yoke 20. Each insulator 50 is attached to the corresponding one of the plurality of teeth 10. Each coil 40 is attached to a corresponding one of the plurality of teeth 10 with a corresponding one of insulators 50 interposed therebetween. First connection terminal 41 and second connection terminal 42 of coil 40 linearly protrude upward.

Next, as illustrated in Fig. 6B, stator 100 is placed into motor case 400. Rotor 200 is placed inwardly of stator 100. At this time, a portion of rotation shaft 210 protrudes from an opening provided in a bottom portion of motor case 400 to the outside of motor case 400. When the placement of rotor 200 is performed, bearings 310, 320 are attached to rotation shaft 210. Bearing cover 410 is attached to an upper surface of rotor 200 while bearing cover 410 covers bearing 320.

Next, as illustrated in Fig. 6C, bracket 500 is attached to motor case 400 while bracket 500 covers motor case 400. At this time, first connection terminals 41 and second connection terminals 42 of coils 40 are inserted from first openings 521 of second through-holes 520 of bracket 500, and protrude upward with respect to second openings 522.

As described above, the width of the lower end of first opening 521 is wider than each of the respective widths of first connection terminal 41 and second connection terminal 42. Therefore, first connection terminal 41 and second connection terminal 42 can be smoothly inserted into respective second through-holes 520.

The width of terminal retainer 523 is equal to each of the respective widths of first connection terminal 41 and second connection terminal 42, or is wider than each of the respective widths of first connection terminal 41 and second connection terminal 42 by the predetermined value. Thus, when first connection terminal 41 and second connection terminal 42 are inserted into second through-holes 520, excessive resistance is not applied to first connection terminal 41 and second connection terminal 42. Therefore, first connection terminal 41 and second connection terminal 42 can be inserted through second through-holes 520, without causing deformation of first connection terminal 41 and second connection terminal 42.

Inner peripheral surfaces of terminal retainers 523 restrict movement of first connection terminal 41 and second connection terminal 42 in the circumferential direction, the radial direction, and the axial direction, inside second through-holes 520, at the time of attachment and after the attachment of bracket 500. That is, while first connection terminal 41 and second connection terminal 42 are positioned in a state of being orderly arranged, first connection terminal 41 and second connection terminal 42 are inserted through second through-holes 520.

The width of the upper end of second opening 522 is wider than each of the respective widths of first connection terminal 41 and second connection terminal 42. Therefore, first connection terminal 41 and second connection terminal 42 are smoothly inserted through respective second through-holes 520. Accordingly, first connection terminal 41 and second connection terminal 42 can protrude upward with respect to the upper surface of the bottom plate of bracket 500, without causing deformation of first connection terminal 41 and second connection terminal 42.

As illustrated in Figs. 6B and 6C, three bolt holes 570 provided in bracket 500 are arranged at positions overlapping three bolt holes 420 provided in a portion formed as a flange of motor case 400, as viewed in the axial direction. Each of the number of bolt holes 570 and the number of bolt holes 420 may be more than three.

Next, as illustrated in Fig. 6D, wiring board 600 is placed into board housing part 510 of bracket 500. At this time, first connection terminal 41 and second connection terminal 42 protruding upward with respect to the bottom plate of bracket 500 are inserted through first through-holes 610. As described above, the width of first through-hole 610 is wider than each of the respective widths of first connection terminal 41 and second connection terminal 42. Therefore, first connection terminal 41 and second connection terminal 42 are smoothly inserted through respective first through-holes 610. Thus, first connection terminal 41 and second connection terminal 42 can protrude upward with respect to the upper surface of wiring board 600, without causing deformation of first connection terminal 41 and second connection terminal 42.

First connection terminals 41 and second connection terminals 42 inserted through first through-holes 610 are connected to the wiring (not illustrated) provided on the upper surface of wiring board 600 via respective conductive adhesives 640. Conductive adhesive 640 is metal solder. However, conductive adhesive 640 is not limited thereto. In a case where the amount of a current supplied to coil 40 is small, the conductive adhesive 640 may be a resin in which conductive particles are dispersed.

As illustrated in Fig. 5, the width of the upper end of second opening 522 in second through-hole 520 is wider than the width of first through-hole 610. On the other hand, the width of the lower end of second opening 522 is equal to each of the respective widths of first connection terminal 41 and second connection terminal 42, or is wider than each of the respective widths of first connection terminal 41 and second connection terminal 42 by the predetermined value. Thus, even if conductive adhesive 640 flows downward through a space between first through-hole 610 and first connection terminal 41 or second connection terminal 42, conductive adhesive 640 stays inside second opening 522, and does not drop below second opening 522, that is, does not drop to stator 100 or rotor 200. That is, the predetermined value described above refers to a width of a degree that does not allow conductive adhesive 640, having flowed down through a space between first through-hole 610 and first connection terminal 41 or second connection terminal 42, to further pass downward.

Next, as illustrated in Fig. 6E, cover 700 is attached to bracket 500, while cover 700 covers board housing part 510 in which wiring board 600 is housed. Although not illustrated, bolt holes are provided in a lower surface of cover 700 at respective positions overlapping bolt holes 420 of motor case 400 and bolt holes 570 of bracket 500, as viewed in the axial direction.

As illustrated in Fig. 1, bolts 800 inserted through washers 810 are inserted through bolt holes 420 of motor case 400, bolt holes 570 of bracket 500, and the bolt holes of cover 700, and are fastened. Instead of washer 810 and bolt 800, a bolt with a flange (washer) in which the flange is integrally formed with the bolt may be used. In this manner, bracket 500, wiring board 600, and cover 700 are positioned, and attached and fixed to motor case 400 inside which stator 100 and rotor 200 are housed. With this, the assembly of motor 1000 is completed.

### [Effects and the like]

As described above, motor 1000 according to the present exemplary embodiment includes motor case 400 having a bottomed cylindrical shape, rotor 200, and stator 100. Rotor 200 includes rotation shaft 210 having axis C extending in the axial direction. Stator 100 is arranged while being spaced from rotor 200 at a predetermined interval in the radial direction. Stator 100 and rotor 200 are housed inside motor case 400, while stator 100 and rotor 200 maintain the arrangement relationship described above.

Motor 1000 includes bracket 500, cover 700, and wiring board 600. Bracket 500 has board housing part 510 that is a recess, and includes an insulation material, and the insulation material is disposed while the insulation material covers the opening of motor case 400. Cover 700 is attached to bracket 500 to cover board housing part 510. Wiring board 600 is housed in board housing part 510, and attached to bracket 500.

Stator 100 includes yoke 20 having an annular shape, the plurality of teeth 10 connected to the inner periphery of yoke 20 at predetermined intervals, and the plurality of coils 40 each attached to the corresponding one of the plurality of teeth 10.

Each of coils 40 includes first connection terminal 41 at one end and second connection terminal 42 at the other end. Each of first connection terminal 41 and second connection terminal 42 linearly protrudes upward.

Wiring board 600 has the plurality of first through-holes 610. Bracket 500 has the plurality of second through-holes 520. First connection terminal 41 and second connection terminal 42 are inserted through the plurality of second through-holes 520, whereby first connection terminal 41 and second connection terminal 42 are positioned in a state of being orderly arranged.

The plurality of first through-holes 610 and the plurality of second through-holes 520 are provided at positions each overlapping a corresponding one of first connection terminal 41 and second connection terminal 42, as viewed in the axial direction.

Each of first connection terminal 41 and second connection terminal 42 is inserted through a corresponding one of the plurality of first through-holes 610, and is inserted through a corresponding one of the plurality of second through-holes 520. In addition, each of first connection terminal 41 and second connection terminal 42 is connected to the wiring provided on wiring board 600. Each of first connection terminal 41 and second connection terminal 42 is electrically connected to the external power supply via the wiring.

According to the present exemplary embodiment, in motor 1000 including wiring board 600, connection work between coil 40 and the wiring provided on wiring board 600 can be easily and reliably performed.

That is, bracket 500 in which second through-holes 520 are provided at positions each overlapping a corresponding one of first connection terminal 41 and second connection terminal 42 as viewed in the axial direction is provided between wiring board 600 and stator 100. Wiring board 600 is also provided with first through-holes 610 at positions each overlapping a corresponding one of first connection terminal 41 and second connection terminal 42, and a corresponding one of second through-holes 520, as viewed in the axial direction.

When bracket 500 is attached to motor case 400, first connection terminal 41 and second connection terminal 42 are inserted through two respective second through-holes 520, whereby first connection terminal 41 and second connection terminal 42 are positioned and fixed in a state of being orderly arranged. Further, in this state, first through-holes 610 are aligned with first connection terminal 41 and second connection terminal 42, and wiring board 600 is attached to bracket 500. Thus, first connection terminal 41 and second connection terminal 42 are respectively inserted through two first through-holes 610. Coil 40 and the wiring provided on wiring board 600 are connected to first through-hole 610.

In this manner, first connection terminal 41 and second connection terminal 42 can be connected to the wiring provided on wiring board 600, in a state where first connection terminal 41 and second connection terminal 42 are positioned by first through-holes 610. As a result, first connection terminal 41 and second connection terminal 42 can be reliably connected to the wiring provided on wiring board 600.

The plurality of second through-holes 520 are provided in bracket 500, and the plurality of first through-holes 610 are provided in wiring board 600. The plurality of second through-holes 520 are arranged in bracket 500 at positions each overlapping, when first through-holes 610 and second through-holes 520 are viewed in the axial direction, a corresponding one of first connection terminal 41 and second connection terminal 42. Thus, it is not necessary to perform connection by individually aligning each of first connection terminal 41 and second connection terminal 42 with the wiring provided on wiring board 600 as disclosed in PTLs 1 to 3. Therefore, the connection work is simplified.

Each of the plurality of second through-holes 520 has first opening 521 provided on the lower side along the axial direction, second opening 522 provided on the upper side along the axial direction, and terminal retainer 523 communicating with first opening 521 and second opening 522. First opening 521 and second opening 522 have respective widths in the radial direction wider than the width of terminal retainer 523 in the radial direction.

With such a configuration, each of first connection terminal 41 and second connection terminal 42 can be smoothly inserted through a corresponding one of two second through-holes 520. Thus, first connection terminal 41 and second connection terminal 42 can be smoothly inserted through first through-holes 610 of wiring board 600, while bending or deformation of first connection terminal 41 and second connection terminal 42 can be avoided.

From the viewpoint of facilitating insertion of first connection terminal 41 and second connection terminal 42, the width of first opening 521, which is an entrance to each of second through-holes 520, in the radial direction is preferably wider than the width of second opening 522 in the radial direction.

Preferably, the width of terminal retainer 523 in the radial direction is equal to each of the respective widths of first connection terminal 41 and second connection terminal 42 in the radial direction, or is wider than each of the respective widths of first connection terminal 41 and second connection terminal 42 in the radial direction by the predetermined value.

With such a configuration, first connection terminals 41 or second connection terminals 42 can be inserted through respective second through-holes 520. In addition, each of inserted first connection terminal 41 and second connection terminal 42 is restricted from moving in the circumferential direction, the radial direction, and the axial direction, inside second through-hole 520. As a result, first connection terminal 41 and second connection terminal 42 are positioned in a state of being orderly arranged, which facilitates insertion of first connection terminal 41 and second connection terminal 42 through corresponding two first through-holes 610 in the subsequent step.

Bracket 500 is preferably formed by molding an insulation material made of resin or the like. Typically, when a through-hole is formed through drilling, the diameter thereof is constant in the thickness direction of a plate. Therefore, it is difficult to form second through-hole 520 through drilling.

On the other hand, in a case where bracket 500 is formed through molding by pouring resin into a mold, it is not so difficult to change the width of second through-hole 520 in accordance with the depth direction, as described in the present exemplary embodiment. In addition, according to such molding, bearing receptacle 550 and rib 560 are also easily formed.

Coil 40 is preferably a formed body including an element wire, including a conductor, wound into layers of n turns, where n is a natural number.

In a typical medium-to-small sized motor, an applied voltage is in a range from about 100 V to about 200 V. In such a case, it is necessary to increase the number of turns of winding in order to obtain a necessary rotating magnetic field. As a result, it is necessary to reduce the wire diameter of the element wire forming the coil.

On the other hand, in recent years, there is an increasing demand for a small-sized motor of a low voltage, for example, a voltage in a range from about 12 V to about 48 V, for use of mounting in a vehicle or the like. In such a motor, the number of turns of the winding may be smaller than that of the typical medium-to-small sized motor. In addition, in order to maintain a space factor in slot 31, the wire diameter of the element wire is adopted to be larger than the wire diameter of the winding used in the typical medium-to-small sized motor.

In the case of the typical medium-to-small sized motor, since the wire diameter of the element wire is small, an end portion of a coil can be bound to a terminal pin, and the coil and a wiring board can be connected via the terminal pin, as described above.

On the other hand, unlike a coil that is a wound body of a copper wire made of a normal round wire, the formed body described above has significantly higher bending rigidity in a direction perpendicular to the longitudinal direction of the element wire, than that of the copper wire made of the normal round wire. Therefore, it is not easy to use a conventional approach of binding the end portion of the coil to the terminal pin or fitting the end portion of the coil into a fixture groove provided in an insulator.

On the other hand, as long as the bending rigidity of the formed body has the characteristics described above, it is not difficult to maintain, while each of first connection terminal 41 and second connection terminal 42 as the end portions of coil 40 linearly protrudes, the shape thereof.

According to the present exemplary embodiment, by utilizing such characteristics of coil 40 using the formed body, first connection terminal 41 and second connection terminal 42 linearly protruding can be orderly arranged and positioned by second through-holes 520 provided in bracket 500. In addition, first connection terminal 41 and second connection terminal 42 are inserted through the plurality of respective first through-holes 610 provided at positions each overlapping a corresponding one of the plurality of second through-holes 520 as viewed in the axial direction, whereby these connection terminals and the wiring provided on wiring board 600 can be easily connected.

In a case where the bending rigidity in the direction perpendicular to the longitudinal direction of the element wire is higher than that of a normal round wire, element wire forming coil 40 need not be the formed body. It is sufficient as long as the shapes of first connection terminal 41 and second connection terminal 42, which are the end portions of coil 40, can be maintained while first connection terminal 41 and second connection terminal 42 linearly protrude.

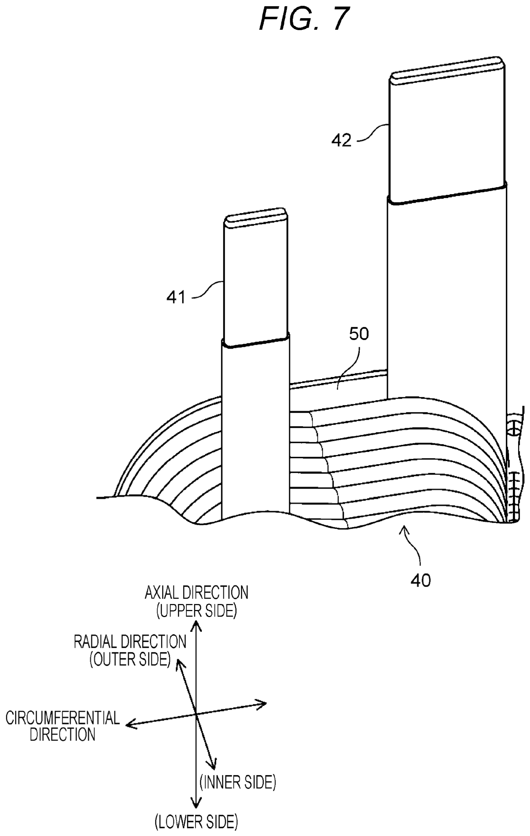

Fig. 7 is an enlarged view of first connection terminal 41 and second connection terminal 42. From the viewpoint of facilitating insertion of first connection terminal 41 and second connection terminal 42 through second through-holes 520, the shapes of respective tips of first connection terminal 41 and second connection terminal 42 may be a chamfered shape as illustrated in Fig. 7.

### <Modification>

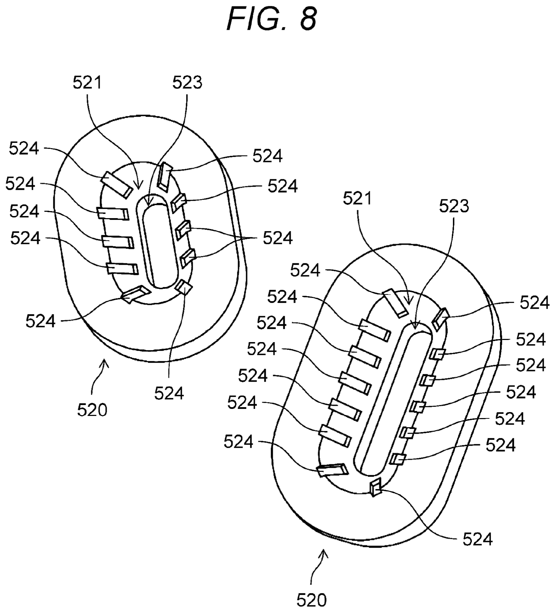

Fig. 8 is a view of second through-holes 520 according to a modification as viewed from below. Note that, for convenience of description, in Fig. 8, parts similar to those in the exemplary embodiment are denoted by the same reference marks, and detailed description thereof is omitted.

Second through-holes 520 according to the modification illustrated in Fig. 8 are different from second through-holes 520 illustrated in Fig. 3C in that, in each of second through-holes 520, a plurality of grooves 524 are provided on an inner peripheral surface thereof.

As described above, the plurality of grooves 524 are provided on the inner peripheral surface of each of second through-holes 520, whereby, when first connection terminal 41 and second connection terminal 42 are inserted through respective second through-holes 520, a contact area between the inner peripheral surface of second through-hole 520 and each of first connection terminal 41 and second connection terminal 42 can be reduced. Thus, frictional resistance with the inner peripheral surface of second through-hole 520 can be reduced, and first connection terminal 41 and second connection terminal 42 can be smoothly inserted through second through-holes 520.

In terms of more smooth insertion of first connection terminal 41 and second connection terminal 42, as illustrated in Fig. 8, the plurality of grooves 524 are preferably formed on an inner peripheral surface of first opening 521 corresponding to an entrance for each of first connection terminal 41 and second connection terminal 42, out of the inner peripheral surfaces of second through-hole 520.

### INDUSTRIAL APPLICABILITY

The motor of the present disclosure allows easy and reliable connection work, for the motor, between an end portion of a coil and wiring provided on a wiring board. Therefore, the motor of the present disclosure is useful for various electrical products.

### REFERENCE MARKS IN THE DRAWINGS

- 10: tooth
- 20: yoke
- 30: stator core
- 31: slot
- 40: coil
- 41: first connection terminal
- 42: second connection terminal
- 50: insulator
- 100: stator
- 200: rotor
- 210: rotation shaft
- 220: rotor core
- 230: magnet
- 310, 320: bearing
- 400: motor case
- 410: bearing cover
- 420: bolt hole
- 500: bracket
- 510: board housing part (recess)
- 520: second through-hole
- 521: first opening
- 522: second opening
- 523: terminal retainer
- 524: groove
- 530: power supply connection port
- 540: lead-out wire
- 550: bearing receptacle
- 560: rib
- 570: bolt hole
- 600: wiring board
- 610: first through-hole
- 620: drive control circuit
- 630: circuit component
- 640: conductive adhesive
- 700: cover
- 710: heat dissipation fin
- 1000: motor

## Claims

1. A motor comprising:
a motor case having a bottomed cylindrical shape;
a rotor housed inside the motor case, the rotor including a rotation shaft having an axis extending in an axial direction;
a stator housed inside the motor case, the stator being arranged while being spaced from the rotor at a predetermined interval;
a bracket including a recess, the bracket including an insulation material, the bracket covering an opening of the motor case;
a cover attached to the bracket, the cover covering the recess; and
a wiring board housed in the recess, the wiring board being attached to the bracket,
wherein the stator includes:
a yoke having an annular shape, the yoke being centered on the axis;
a plurality of teeth arranged at predetermined intervals on an inner periphery of the yoke; and
coils each attached to a corresponding one of the plurality of teeth,
each of the coils includes a first connection terminal at one end and a second connection terminal at another end, and each of the first connection terminal and the second connection terminal linearly protrudes toward one side in the axial direction,
the wiring board includes a plurality of first through-holes,
the bracket includes a plurality of second through-holes, for orderly arranging the first connection terminal and the second connection terminal, and
when a longitudinal direction of the rotation shaft is defined as the axial direction,
the plurality of first through-holes and the plurality of second through-holes are located at positions each overlapping a corresponding one of the first connection terminal and the second connection terminal, as viewed in the axial direction, and
each of the first connection terminal and the second connection terminal is inserted through a corresponding one of the plurality of first through-holes, is inserted through a corresponding one of the plurality of second through-holes, and is connected to wiring on the wiring board.

2. The motor according to Claim 1, wherein
each of the plurality of second through-holes has a first opening disposed on a lower side, a second opening disposed on an upper side, and a terminal retainer communicating with the first opening and the second opening, and
in a radial direction orthogonal to the axial direction,
the first opening and the second opening have respective widths in the radial direction wider than a width of the terminal retainer in the radial direction.

3. The motor according to Claim 2, wherein the width of the first opening in the radial direction is wider than the width of the second opening in the radial direction.

4. The motor according to Claim 3, wherein the width of the terminal retainer in the radial direction is equal to each of respective widths of the first connection terminal and the second connection terminal in the radial direction, or is wider than each of the respective widths of the first connection terminal and the second connection terminal in the radial direction.

5. The motor according to Claim 4, wherein each of the plurality of second through-holes includes a plurality of grooves on an inner peripheral surface of the second through-hole.

6. The motor according to Claim 4, wherein each of the plurality of second through-holes includes a plurality of protrusions on an inner peripheral surface of the second through-hole.

7. The motor according to Claim 1, wherein the first connection terminal and the second connection terminal include respective tips having a chamfered shape.

8. The motor according to any one of Claims 1 to 7, wherein each of the coils is a formed body including an element wire wound into layers of n turns, where n is a natural number, the element wire including a conductor.
